# EUROPEAN PATENT APPLICATION

(11) **EP 4 749 882 A1**
(43) Date of publication of application: **27.05.2026**
(21) Application number: 25200053.4
(22) Date of filing: 03.09.2025
(51) Int. Cl.: H02J 7/50

(54) **BATTERY PACK AND WIRELESS COMMUNICATION APPARATUS AND WIRELESS COMMUNICATION METHOD THEREOF**

(30) Priority: 26.11.2024 KR 20240171344
(71) Applicant: SAMSUNG SDI CO., LTD., Yongin-si, Gyeonggi-do 17084 (KR)
(72) Inventor: KIM, Min Su, 16678 Suwon-si (KR)
(74) Representative: Marks & Clerk LLP

(57) **Abstract**

The present disclosure relates to a battery pack and a wireless communication apparatus, and a wireless communication method thereof. The battery pack comprises a pack case; a plurality of battery modules mounted inside the pack case; a plurality of slave battery management systems (BMSs) that are mounted on each battery module and collect battery status information of each battery module; and a master BMS configured to receive the battery status information from each of the plurality of slave BMSs through radio frequency (RF) communication and integrate and manage the plurality of slave BMSs, wherein RF communication is performed between the plurality of slave BMSs and the master BMS through a repeater based on an active phased array antenna system.

## Description

### FIELD

The present disclosure relates to a battery pack and a wireless communication apparatus, and a wireless communication method thereof.

### BACKGROUND

A battery system applied to electrical vehicles and the like may include a plurality of battery packs including battery modules and a slave battery management system (BMS) that manages the battery modules.

Further, the battery system may further include a master BMS that communicates with a vehicle system and manages a plurality of battery packs.

In most battery packs, wired BMSs are used, but the use of wired BMSs causes problems such as increased weight, decreased reliability, and difficulty in maintenance due to complex wiring.

Accordingly, recently, in order to solve problems such as poor quality of electrical wiring related to wire cables and connectors, frequent maintenance, etc., and to reduce the weight of electric vehicles and increase mileage, research and development on methods of wirelessly communicating between a master BMS and a plurality of slave BMSs have been increasing.

The herein information disclosed in this Background section is for enhancement of understanding of the background of the present disclosure, and therefore, it may contain information that does not constitute related (or prior) art.

### SUMMARY

The present disclosure is directed to providing a battery pack and a wireless communication apparatus that enable a master battery management system (BMS) and a plurality of slave BMSs to perform wireless communication on the basis of an active phased array antenna and adaptive beam steering technology, and a wireless communication method thereof.

However, objects that the present disclosure intends to achieve are not limited to the herein-described objects and other objects that are not described may be clearly understood by those skilled in the art from the following description.

According to aspects of the present disclosure, there is provided a battery pack, which includes a pack case, a plurality of battery modules mounted inside the pack case, a plurality of slave BMSs that are mounted on each battery module and collect battery status information of each battery module, and a master BMS configured to receive the battery status information from each of the plurality of slave BMSs through radio frequency (RF) communication and integrate and manage the plurality of slave BMSs, wherein RF communication is performed between the plurality of slave BMSs and the master BMS through a repeater based on an active phased array antenna system.

The active phased array antenna system may use an adaptive beamforming algorithm based on real-time channel state information (CSI) in order to improve communication quality during the RF communication between the master BMS and the plurality of slave BMSs.

An active phased array antenna of the active phased array antenna system may be composed of multiple small antennas arranged in a grid shape, may adjust a signal of each antenna by a control unit so that a strong signal is transmitted in a specific direction, and may be installed inside a top cover of the pack case of the battery pack.

The master BMS may simultaneously communicate with the plurality of slave BMSs through the repeater on the basis of a space-division multiple access (SDMA) method, and perform interference removal by applying a zero-forcing beamforming technique.

The master BMS may adjust a beam direction and beam shape of the active phased array antenna in real time to a slave BMS that will perform control in response to dynamic battery status information received through the plurality of slave BMSs.

The active phased array antenna system may include an antenna array that includes a plurality of patch antenna elements and has an N×N array structure, where N is a natural number, an RF front-end implemented with a specified frequency band, a specified transmit power, a specified receive sensitivity, a specified modulation scheme, and a specified channel bandwidth, and a control unit that performs an adaptive beamforming algorithm.

The active phased array antenna system may further include at least one of a thermal management unit implemented so that thermal management efficiency is improved using a heat conduction path and a heat dissipation structure, and a power management unit that supports dynamic voltage/frequency scaling (DVFS) and an ultra-low power standby mode of 1 µW or less.

The control unit may be implemented to set a phase control method and a beam steering angle range of the adaptive beamforming algorithm and perform a process of setting a target direction, calculating a phase of each antenna element, generating a digital phase shifter control signal, and applying a phase delay to an RF signal.

The control unit may perform adaptive duty cycling that dynamically adjusts an active interval according to traffic load, and a low-power wake-up mechanism through a low-power wake-up receiver in order to perform an energy-efficient communication protocol.

The control unit of the active phased array antenna system may monitor link quality according to quality criteria on the basis of specified measurement parameters during RF communication between the master BMS and the plurality of slave BMSs.

The control unit may perform dynamic node management, and the dynamic node management may include node detection in which a new slave BMS is detected and automatically registered, node tracking in which location information of each slave BMS is updated in real time, and node departure management in which a node that has continuously failed communication is regarded as disconnected and deregistered.

The control unit may apply a specified security mechanism in order to enhance security of the communication protocol, and the security mechanism may apply physical layer security (PLS) that prevents eavesdropping using an artificial noise insertion technique, and an encryption method in which a specified encryption algorithm and a key exchange protocol are combined.

According to aspects of the present disclosure, there is provided a wireless communication apparatus of a battery pack, which includes a plurality of battery modules mounted inside a pack case, a plurality of slave BMSs that are mounted on each battery module and collect battery status information of each battery module, a master BMS configured to receive the battery status information from each of the plurality of slave BMSs through RF communication and integrate and manage the plurality of slave BMSs, and a repeater based on an active phased array antenna system that is configured to perform the RF communication between the plurality of slave BMSs and the master BMS.

According to aspects of the present disclosure, there is provided a wireless communication method of a battery pack, which includes measuring, by each of a plurality of slave BMSs, battery status information on each of battery modules and converting the measured battery status information into an RF signal, transmitting, by each slave BMS, the RF signal to a master BMS through a repeater based on an active phased array antenna system, receiving, by the master BMS, the RF signal through the repeater, analyzing, by the master BMS, the battery status information corresponding to the RF signal, and transmitting, by the master BMS, a control signal according to a result of the analyzing of the battery status information to each of the plurality of slave BMSs through the repeater.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is an example diagram illustrating a schematic configuration of a conventional battery pack;
FIG. 2 is an example diagram illustrating a schematic configuration of a battery pack according to embodiments of the present disclosure;
FIG. 3 is an example diagram for describing a pack case of the battery pack according to embodiments of the present disclosure;
FIG. 4 is an example diagram illustrating a schematic configuration of a repeater included in an active phased array antenna system in FIG. 2;
FIG. 5 is an example diagram illustrating a schematic configuration of the active phased array antenna system in FIG. 4;
FIG. 6 is an example diagram for describing a hierarchical structure of a communication protocol in FIG. 5;
FIG. 7 is a set of example diagrams for describing the hierarchical structure of the communication protocol in FIG. 6 in more detail; and
FIG. 8 is an example diagram for describing a communication function and system characteristics of the active phased array antenna system in FIG. 5.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked," or "connected" to another element, the elements may be directly "coupled," "linked," or "connected" to each other, or an intervening element may be present therebetween, through which the element may be "coupled," "linked," or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack includes one or more battery modules and a pack housing in which an accommodation space for accommodating the one or more battery modules is formed.

The battery module includes a plurality of battery cells and a module housing. The battery cells may be accommodated inside the module housing in a stacked form. The battery cell may include a positive lead and a negative lead. As the battery cell, a circular battery cell, a prismatic battery cell, or a pouch-type battery cell may be used depending on the shape of a battery.

The battery pack may be configured such that one cell stack in which battery cells are stacked, instead of the battery module, forms one module. The cell stack may be accommodated in the accommodation space of the pack housing or may be accommodated in an accommodation space partitioned by a frame, a partition, etc.

The battery cell generates a large amount of heat when charged/discharged. The generated heat accumulates in the battery cell and accelerates the degradation of the battery cell. Therefore, the battery pack further includes a cooling member to suppress the degradation of the battery cell. The cooling member is provided at a lower portion of the accommodation space in which the battery cell is provided, but the present is not limited thereto, and the cooling member may be provided at an upper portion or a side surface depending on the battery pack.

An exhaust gas inside each of the battery cells that is generated under abnormal operating conditions known as even thermal runaway or a thermal event may be discharged to the outside of the battery cell. The battery pack or the battery module may include an exhaust port or the like for discharging exhaust gases to suppress damage to the battery pack or battery module.

The battery pack may include a battery and a battery management system (BMS) for managing the battery. The BMS may include a detection device, a balancing device, and a control device. The battery module may include a plurality of cells connected in series or in parallel to each other. The battery modules may be connected in series or in parallel to each other.

The detection device may detect the status (a voltage, a current, a temperature, etc.) of the battery to detect status information indicating the status of the battery. The detection device may detect a voltage of each of the cells or battery modules constituting the battery. The detection device may detect a current flowing through the battery module or each of the battery modules constituting the battery pack. The detection device may detect a cell temperature, a module temperature, and/or an ambient temperature at at least one point of the battery.

The balancing device may perform a balancing operation on the battery modules and/or cells constituting the battery. The control device may receive the status information (a voltage, a current, a temperature, etc.) of the battery module from the detection device. The control device may monitor and calculate the status (a voltage, a current, a temperature, a state of charge (SOC), a state of health (SOH), etc.) of the battery module on the basis of the status information received from the detection device. Further, the control device may perform control functions (e.g., temperature control, balancing control, charge/discharge control, etc.), protection functions (e.g., over-discharge, over-charge, or over-current prevention, short-circuit, an extinguishing function, etc.), and the like on the basis of results of the status monitoring. Further, the control device may perform wired or wireless communication functions with external devices (e.g., an upper controller, a vehicle, a charger, a personal communications service (PCS), etc.) of the battery pack.

The control device may control a charging/discharging operation and a protection operation of the battery. To this end, the control device may include a charging/discharging control unit, a balancing control unit, and a protection unit.

The BMS is a system that monitors the status of the battery and performs diagnosis and control, communication, and protection functions, and the BMS may calculate a charge or discharge state, calculate a battery lifetime or an SOH, cut off battery power (relay control) as necessary, control thermal management (cooling, heating, etc.), perform a high-voltage interlock function, and detect or calculate insulation and short-circuit conditions.

A relay may be a mechanical contactor that is turned on or off by the magnetic force of a coil or may be a semiconductor switch such as a metal-oxide-semiconductor field-effect transistor (MOSFET).

Relay control is a function of cutting off the power supply from a battery in the event of a problem with a vehicle and battery system, and may be composed of one or more relays and pre-charge relays on each of a positive terminal and a negative terminal.

Since there is a risk of inrush current occurring in a high-voltage capacitor on an inverter input side when the battery load is connected, a function of operating a pre-charge relay before a main relay is connected when the vehicle starts and connecting the pre-charge relay to a pre-charge resistor may be provided to prevent the inrush current.

A high-voltage interlock is a circuit that uses a small signal to detect whether all high-voltage components in an entire automobile system are connected, and may be equipped with a function of forcibly opening a relay when there is an open at any point on an entire loop.

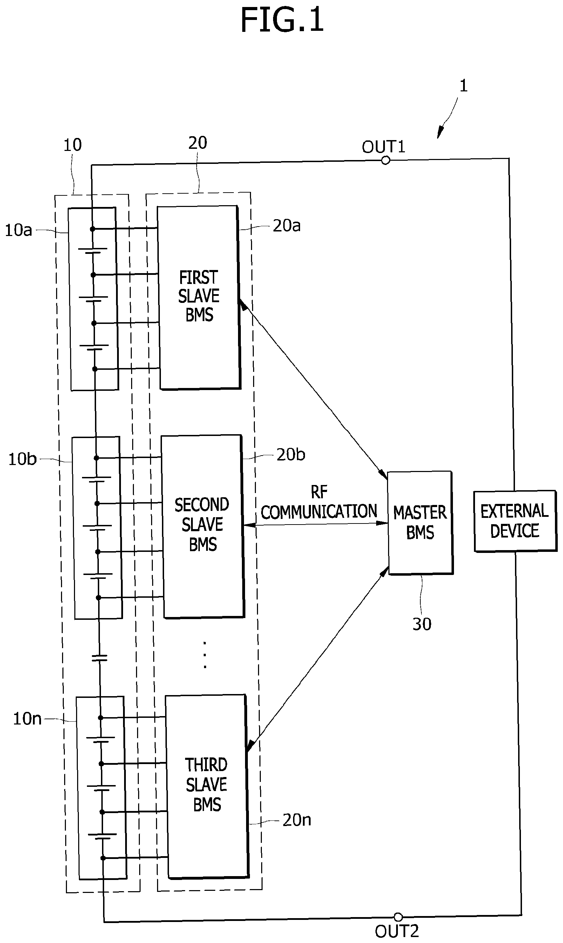

FIG. 1 is an example diagram illustrating a schematic configuration of a conventional battery pack.

Referring to FIG. 1, a conventional battery pack 1 may include a plurality of battery modules 10a, 10b, ..., 10n (hereinafter referred to as "10"), a plurality of slave BMSs 20a, 20b, ..., 20n (hereinafter referred to as "20"), and a master BMS 300.

The plurality of battery modules 10 may each include a plurality of battery cells connected in series and/or in parallel. In some embodiments, the battery cells may be rechargeable secondary batteries.

The plurality of slave BMSs 20 may be installed in one-to-one correspondence with the plurality of battery modules 10. Each of the plurality of slave BMSs 20 may be electrically coupled to any one of the plurality of battery modules 10, in which the corresponding slave BMS 20 is installed. Therefore, the number of slave BMSs 20 may be equal to the number of battery modules 10.

The slave BMS 20 may measure battery status information on the battery module 10 electrically connected to the corresponding slave BMS 20. Here, the battery status information may include at least one of a cell voltage, a cell current, and a cell temperature of each battery cell included in each battery module 10. Further, the battery status information may include at least one of a module voltage, which is a voltage at both ends of the battery module 10, and a module current, which is a current flowing through the battery module 10.

The slave BMS 20 may include a wireless communication unit (not illustrated) and transmit the measured battery status information to the master BMS 30 through the wireless communication unit.

Further, the slave BMS 20 may perform a cell balancing function on the battery cells included in the battery module 10.

The master BMS 30 may wirelessly communicate with each of the plurality of slave BMSs 20 to transmit various types of control signals or receive the battery status information.

The master BMS 30 may include a wireless communication unit (not illustrated) and receive the battery status information of the battery module 10 from each of the plurality of slave BMSs 20 through the wireless communication unit and integrate and manage the plurality of slave BMSs 20.

The wireless communication units of the slave BMS 20 and master BMS 30 include a radio frequency integrated circuit (RFIC) and may perform wireless communication on the basis of radio frequency (RF) signals.

However, RF-based wireless communication is vulnerable to electromagnetic interference and makes it difficult to implement stable wireless communication due to a complex structure of an inside of the battery pack and a battery pack environment surrounded by metal. Further, due to the trend toward larger capacity and higher voltage of electric and hybrid vehicle (xEV) batteries, more precise and reliable battery management technology is required.

Accordingly, the present disclosure may enable the performance, safety, and efficiency of xEV battery packs to be improved through wireless BMS technology using an active phased array antenna, and may also be applied to various fields where large-scale battery systems are used, such as energy storage systems (ESSs), as well as the automobile industry, thereby enabling the application to future energy technologies.

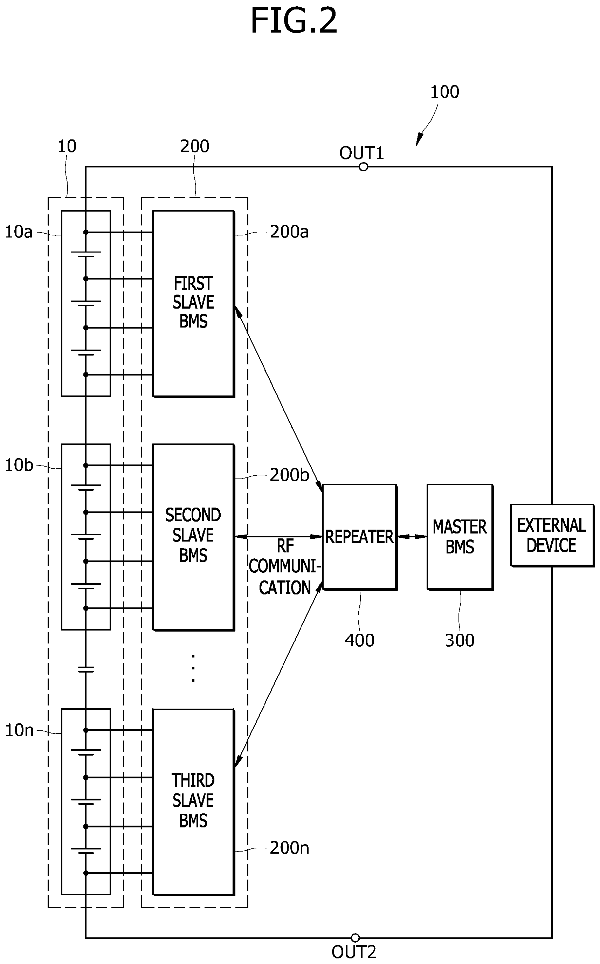

FIG. 2 is an example diagram illustrating a schematic configuration of a battery pack according to embodiments of the present disclosure.

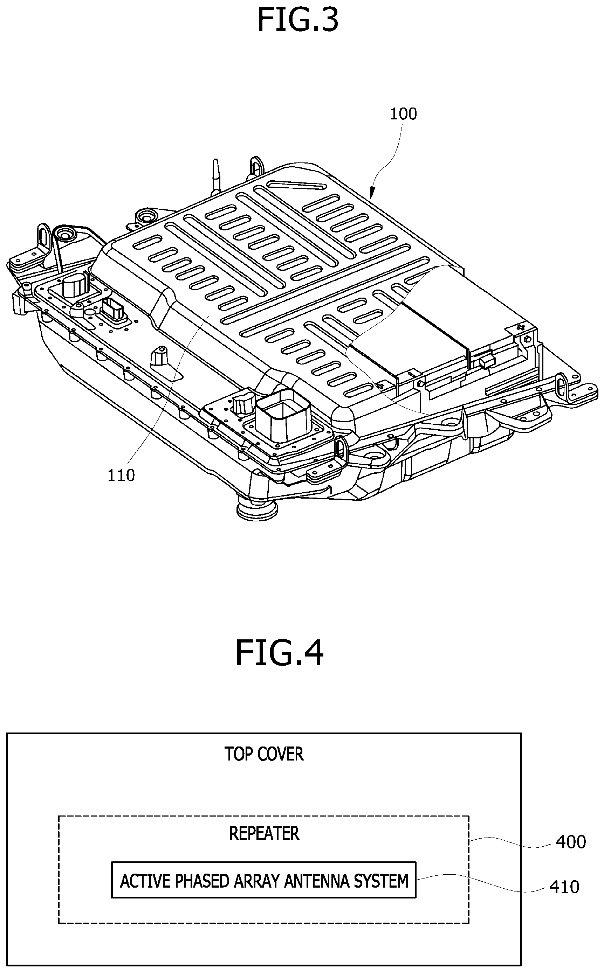

Referring to FIG. 2, a battery pack 100 according to embodiments of the present disclosure may include a plurality of battery modules 10a, 10b, ..., 10n (hereinafter referred to as "10"), a plurality of slave BMSs 200a, 200b, ..., 200n (hereinafter referred to as "200"), and a master BMS 300. The master BMS 300 and the plurality of slave BMSs 200 perform RF-based wireless communication with each other through a repeater 400. The repeater 400 includes an active phased array antenna system 410 (see FIG. 4).

In this case, the repeater 400 may be connected to the master BMS 300 through wired communication or embedded or integrated into the master BMS 300, and may also be connected to the plurality of slave BMSs 200 wirelessly through RF communication.

FIG. 4 is an example diagram illustrating a schematic configuration of the repeater 400 including the active phased array antenna system 410 in FIG. 2, and the active phased array antenna system 410 transmits and receives signals to or from the master BMS 300 and the plurality of slave BMSs 200 through an active phased array antenna, and, in this case, "beamforming" technology is used.

This beamforming technology is similar to a technology that focuses light of multiple flashlights from different directions into one spot, and this beamforming technology allows signals to be transmitted well while avoiding a metal structure inside the battery pack. Here, the active phased array antenna includes multiple small antennas that are arranged in a grid shape and may control a signal of each antenna to transmit a strong signal in a specific direction, and the active phased array antenna operates on the same principle as focusing the light of flashlights to a desired location, and is installed inside a top cover of a pack case 110 of the battery pack.

The battery pack 100 may include the pack case 110 (see FIG. 3) that forms an exterior thereof. The plurality of battery modules 10, the plurality of slave BMSs 200, the master BMS 300, and the repeater 400 may be mounted inside the pack case 110 of the battery pack 100 as illustrated in FIG. 3.

The slave BMSs 200 and the master BMS 300 perform RF communication using the repeater 400 including the active phased array antenna system 410 (see FIG. 4).

The plurality of battery modules 10 may each include a plurality of battery cells connected in series and/or in parallel. In some embodiments, the battery cells may be rechargeable secondary batteries.

The plurality of slave BMSs 200 may be installed in one-to-one correspondence with the plurality of battery modules 10. Each of the plurality of slave BMSs 200 may be electrically coupled to any one of the plurality of battery modules 10, in which the corresponding slave BMS 200 is installed. Therefore, the number of slave BMSs 200 may be equal to the number battery modules 10.

For example, a first slave BMS 200a may be electrically coupled to a first battery module 10a, a second slave BMS 200b may be electrically coupled to a second battery module 10b, and a third slave BMS 200c may be electrically coupled to a third battery module 10c.

The slave BMS 200 may measure battery status information on the battery module 10 electrically connected thereto and transmit the measured battery status information to the master BMS 300 through RF communication. Here, the battery status information may include at least one of a cell voltage, a cell current, and a cell temperature of each battery cell included in each battery module 10. Further, the battery status information may include at least one of a module voltage, which is a voltage at both ends of the battery module 10, and a module current, which is a current flowing through the battery module 10.

When an abnormality such as a sudden temperature rise or the like is detected, the slave BMS 200 may transmit a warning signal to the master BMS 300 through the repeater 400. Then, the master BMS 300 may transmit a control command to the corresponding slave BMS 200 through the repeater 400.

In this case, the repeater 400 transmits the warning signal and the control command to the master BMS 300 and the slave BMS 200, respectively, according to a communication protocol of the active phased array antenna system 410. Further, the active phased array antenna system 410 uses "beamforming" technology when transmitting or receiving signals through the active phased array antenna.

The slave BMS 200 may perform RF communication with the master BMS 300 using its own pre-assigned ID, and the master BMS 300 may store the ID pre-assigned to the slave BMS 200. Here, the ID may be identification information for distinguishing the plurality of slave BMSs.

Although not illustrated in the drawing, the slave BMS 200 may measure the battery status information such as a voltage, a current, a temperature, etc., of the battery module 10 through a measurement unit (not illustrated) and measure a cell voltage of each of the plurality of battery cells. For example, the measurement unit (not illustrated) may measure a voltage at both ends of each of the plurality of battery cells to measure a cell voltage of each battery cell. In this case, the measurement unit may measure the cell voltage of each battery cell in various forms, and the present disclosure is not limited by this voltage measurement method. Further, the measurement unit may measure a cell current flowing into or out of each of the plurality of battery cells, and a temperature of the battery module 10.

Accordingly, the measurement unit may include a voltage sensor configured to measure the cell voltage of each of the plurality of battery cells. Further, the measurement unit may include a current sensor configured to measure the cell current of each of the plurality of battery cells. Further, the measurement unit may include a temperature sensor configured to measure the temperature of the battery module 10. The temperature sensor may be disposed within a predetermined distance from the battery module 10 to measure the temperature of the battery module 10.

The measurement unit may be electrically connected to the battery module 10 to collect the battery status information. For example, the measurement unit may be composed of an application specific integrated circuit (ASIC), a battery monitoring IC (BMIC), etc., as an IC that can collect the battery status information.

The battery status information measured through the measurement unit may be transmitted to the master BMS 300 through the active phased array antenna system 410 of the repeater 400.

To this end, a first control unit may packetize and encrypt the battery status information and thus security can be improved.

In this way, the slave BMS 200 may transmit the battery status information to the master BMS 300 through the active phased array antenna system 410 of the repeater 400 and receive control commands related to monitoring and cell balancing from the master BMS 300 through the active phased array antenna system 410 of the repeater 400.

Accordingly, the slave BMS 200 may be implemented with a central processing unit (CPU) or a system on chip (SoC) as a subject that controls its operation, and may control a plurality of hardware components connected to the processor or software components by running an operating system or application and perform various data processing and operations.

The master BMS 300 is a component that integrates and controls the plurality of slave BMSs 200, and may be operatively connected to the plurality of slave BMSs 200 by an RS communication method through the active phased array antenna system 410 of the repeater 400.

The master BMS 300 may receive the battery status information from the plurality of slave BMSs 200 through the active phased array antenna system 410 of the repeater 400 to integrate and manage the plurality of slave BMSs 200, and may measure at least one of a battery pack voltage and a battery pack current to diagnose the status of the battery pack 100.

The master BMS 300 may transmit various types of control commands or receive the battery status information through RF communication with each of the plurality of slave BMSs 200 and the active phased array antenna system 410 of the repeater 400. The master BMS 300 may calculate an SOC, an SOH, etc., of each battery module 10 or determine whether each battery module 10 has overvoltage or undervoltage or is overcharged or over-discharged on the basis of the battery status information received from the slave BMS 200.

The master BMS 300 may be connected to an upper controller (not illustrated).

For example, the upper controller may be a control unit of an upper system (e.g., an automobile electronic control unit (ECU), an ESS, etc.) in which the battery pack 100 is mounted.

The master BMS 300 may transmit information on the status and control of the battery to the upper controller or control an operation of the battery pack 100 on the basis of a control signal received from the upper controller. The master BMS 300 may communicate with the upper controller to receive a command and information, and manage and control at least one slave BMS 200 included in the battery pack 100 according to the received command.

The master BMS 300 may periodically check a response of each slave BMS 200, and when a non-responsive slave BMS 200 is detected, attempt to reconnect to the corresponding slave BMS 200, and thus the connectivity between the slave BMS 200 and the master BMS 300 may be checked.

The master BMS 300 may set an optimal path with the slave BMS 200 on the basis of a signal strength. When a failure occurs in the slave BMS 200, the master BMS 300 may switch the path of the corresponding slave BMS 200 to an alternative path.

The master BMS 300 may optimize (i.e., improve) communication performance by monitoring communication quality indicators. Here, the communication quality indicators may include, for example, a signal-to-noise ratio (SNR), a bit error rate (BER), etc.

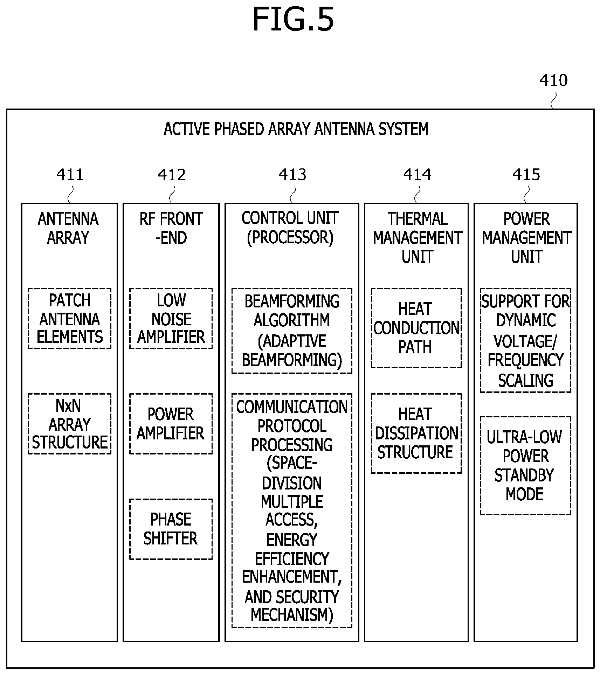

FIG. 5 is an example diagram illustrating a schematic configuration of the active phased array antenna system in FIG. 4.

Referring to FIG. 5, the active phased array antenna system 410 may include an antenna array 411, an RF front-end 412, a control unit 413, a thermal management unit 414, and a power management unit 415.

The antenna array 411 may include a plurality of patch antenna elements and have an N×N array structure (where N is a natural number).

For example, the antenna array 411 may include 16 patch antenna elements in a 4×4 planar array, each antenna element may have a size of λ/2 (about 6.25 cm at 2.4 GHz), and a total size may be about 25 cm×25 cm (4×6.25 cm+free space).

The RF front-end 412 may be implemented with a specified frequency band (e.g., 2.4 GHz to 2.5 GHz industrial, scientific, and medical (ISM) band), a specified transmit power (e.g., up to 10 dBm (100 mW)), a specified receive sensitivity (e.g., -95 dBm @ 1 Mbps), a specified modulation scheme (e.g., adaptive orthogonal frequency-division multiplexing (OFDM) (binary phase-shift keying (BPSK), quadrature phase-shift keying (QPSK), 16-quadrature amplitude modulation (QAM), or 64-QAM)), and a specified channel bandwidth (e.g., 20 MHz) (scalable). Further, the RF front-end 412 may include a low noise amplifier (LNA), a phase shifter that is adjustable in 5.625° intervals from 0° to 360° with a 6-bit digital control method, an independent GaN high electron mobility transistor (HEMT) amplifier for each antenna element, and a power amplifier (PA) with a maximum output power of 20 dBm.

The control unit 413 may include a specified processor (e.g., low-power advanced reduced instruction set computer (RISC) machine (ARM) Cortex-M4F (80 MHz operation)), a specified field-programmable gate array (FPGA) (e.g., Xilinx Artix-7 series (for beamforming algorithm acceleration)), and a memory (e.g., a 256 KB static random access memory (SRAM) or a 1 MB flash memory), and the power consumption is preferably less than or equal to 100 mW in an active mode.

The control unit 413 may perform adaptive beamforming. To this end, channel state information (CSI) collection (e.g., receiving pilot signals from each slave BMS at a specified period (e.g., at 100 ms intervals)), a beamforming algorithm (e.g., an adaptive algorithm based on a minimum mean square error (MMSE)), and a beam update period (e.g., dynamic adjustment according to real-time CSI (minimum 10 ms and maximum 1 s)) may be set.

Here, in the beamforming algorithm, adaptive beamforming is performed, an MMSE algorithm is used, and the update period (e.g., 100 ms) and a convergence period of time (e.g., typically within 5 iterations (approximately 500 ms)) are set. Further, in the beamforming algorithm, a phase control method (e.g., use of a digital phase shifter, and a phase resolution (e.g., 5.625 degrees (64 steps))), and a beam steering angle range (e.g., an azimuth (-60 degrees to +60 degrees) and an elevation angle (e.g., 0 degrees to 60 degrees)) are set. Further, in a beamforming process, a process of setting a target direction (e.g., an azimuth of 30 degrees and an elevation angle of 45 degrees), calculating a phase of each antenna element, generating a digital phase shifter control signal, and applying a phase delay to an RF signal may be performed.

The control unit 413 may perform space-division multiple access (SDMA). Accordingly, the control unit 413 may simultaneously communicate with the plurality of slave BMSs 200, and may perform interference removal by applying a zero-forcing beamforming technique.

The control unit 413 may perform an energy-efficient communication protocol. In this case, in the communication protocol, a specified basic frame structure (e.g., a 10 ms period, and a 1 ms active interval+9 ms standby interval), an adaptive duty cycling (e.g., dynamically adjusting an active interval from 0.1 ms to 5 ms according to traffic load), and a wake-up mechanism (e.g., use of a low-power wake-up receiver, and -90 dBm sensitivity) may be applied.

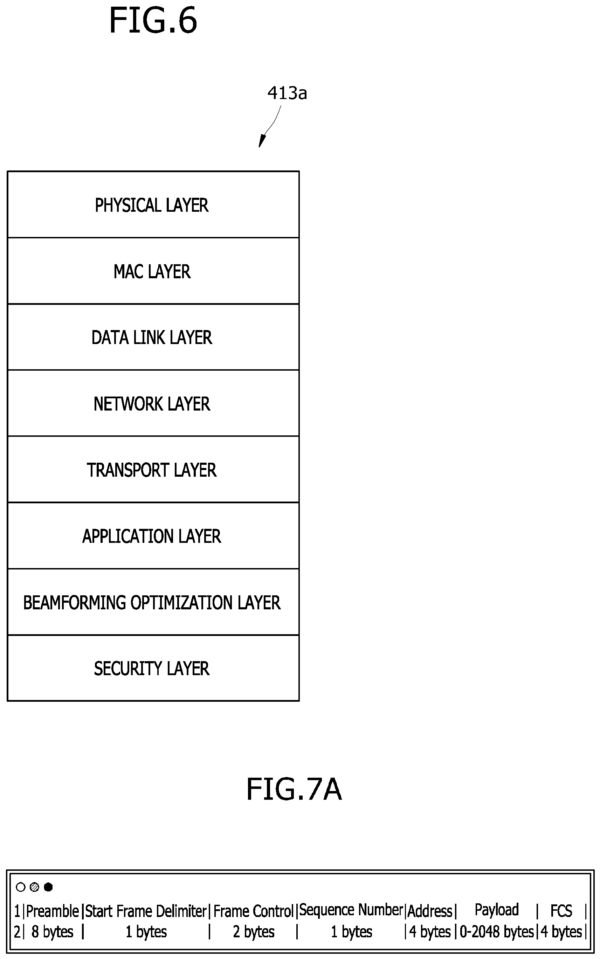

Here, a communication protocol 413a (see FIG. 6) includes a physical layer, a medium access control (MAC) layer, and a network layer.

The control unit 413 may monitor link quality.

For example, the control unit 413 may monitor the link quality according to measurement parameters (e.g., a received signal strength indicator (RSSI), an SNR, and a packet error rate (PER)), a measurement period (e.g., measurements are taken every second in normal conditions, and the measurement frequency increases at 100 ms intervals when degradation is detected), and quality criteria (e.g., excellent (RSSI>-70 dBm, SNR>20 dB, and PER<1%), moderate (-80 dBm≤RSSI≤-70 dBm, 10 dB≤SNR≤20 dB, and 1%≤PER≤5%), and degradation (RSSI<-80 dBm, SNR<10 dB, and PER≥5%)).

The control unit 413 may perform dynamic node management.

For example, the control unit 413 may perform node detection (e.g., full frequency scan on initialization, periodic beacon signal transmission (at 5 second intervals), and automatic registration when a new slave BMS is detected), node tracking (e.g., real-time update of location information of each slave BMS, estimation of moving speed and direction (using a Kalman filter), and preemptive beam steering based on predicted location), and node departure management (e.g., it is regarded as being disconnected when communication fails 10 times in a row, reconnection is attempted at 1 second intervals for the first minute and then at 10 second intervals, and the node is deregistered after 1 hour).

The control unit 413 may perform a process for optimizing energy efficiency (i.e., improving energy efficiency) in power management, communication scheduling, and a beamforming process.

For example, the control unit 413 may perform energy efficiency optimization (i.e., improving energy efficiency) in a power management technique (e.g., applying dynamic voltage/frequency scaling (DVFS), switching to a low power mode (power consumption of 10 mW or less) when on standby, step-by-step deep sleep mode: short standby (less than 1 ms), and long standby (more than 10 ms)), communication scheduling (e.g., adaptive slot allocation according to traffic, priority queue management based on data importance, and increasing transmission efficiency through burst transmission), and a beamforming process (e.g., simultaneous multi-node communication through multi-beamforming, applying an SDMA technique, and dynamically adjusting beam width: short range (wide beam) and long range (narrow beam)).

The control unit 413 may perform management of errors such as communication errors, hardware errors, etc., and a software recovery operation.

For example, the control unit 413 may perform communication error response (e.g., selective retransmission by implementing an automatic repeat request (ARQ), applying forward error correction (FEC) using Reed-Solomon code, and automatic frequency change through channel hopping when interference is detected), hardware error management (e.g., antenna element failure detection and isolation, beamforming reconfiguration using remaining antenna elements, operation continuation in a partially degraded state), and a software recovery operation (e.g., system hang-up detection through a watchdog timer, error log generation and remote diagnostic functions, and module restart or entire system reboot through a step-by-step software reset).

The control unit 413 may apply a specified security mechanism. For example, the security mechanism may apply at least one of physical layer security (PLS) (e.g., anti-eavesdropping using an artificial noise insertion technique), encryption (e.g., use of an AES-256-GCM algorithm), and key exchange (e.g., an elliptic curve Diffie-Hellman (ECDH) protocol).

The thermal management unit 414 is implemented so that thermal management efficiency may be improved using an improved heat conduction path and heat dissipation structure.

The power management unit 415 may be implemented to support DVFS and an ultra-low power standby mode (e.g., power consumption of 1 µW or less).

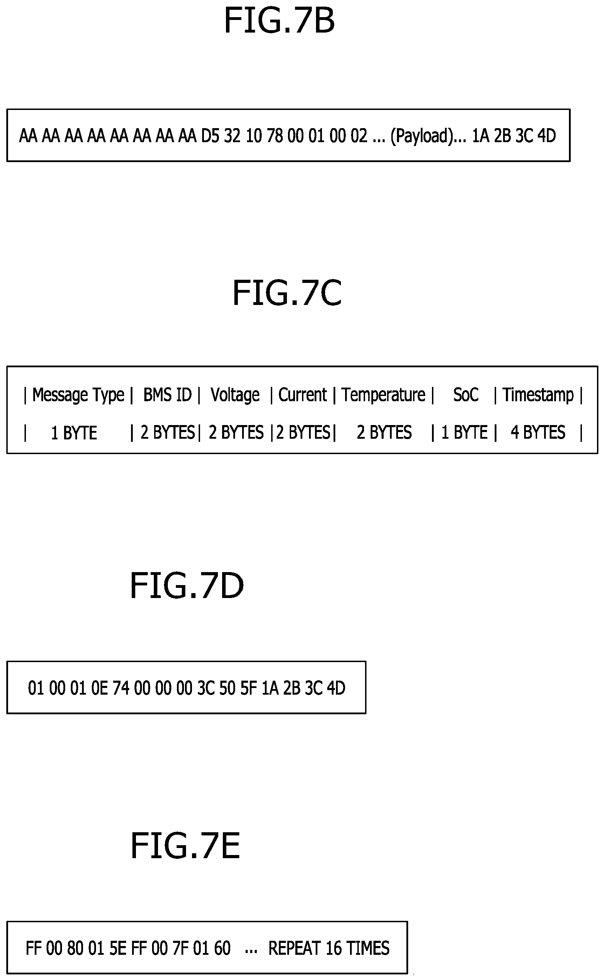

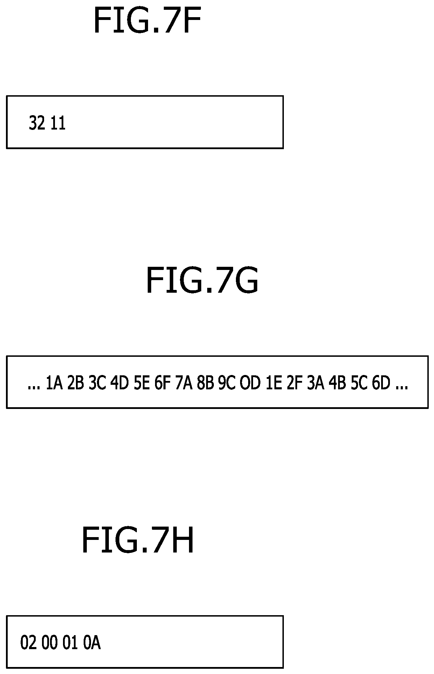

FIG. 6 is an example diagram for describing a hierarchical structure of the communication protocol in FIG. 5. FIG. 7 is a set of example diagrams for describing the hierarchical structure of the communication protocol in FIG. 6 in more detail.

Referring to FIG. 6, in a physical layer, a specified modulation scheme (e.g., OFDM), a specified channel bandwidth (e.g., 20 MHz), and a maximum data rate (e.g., 54 Mbps) may be set.

In an MAC layer, an access scheme (e.g., time-division multiple access (TDMA)), a frame structure (e.g., a 10 ms period and 10 time slots), and a specified number of dedicated time slots (e.g., 1) to be allocated to each slave BMS may be set.

In a network layer, a topology (having a star type (the master BMS is a central node)), addressing (e.g., use of a 16-bit unique ID), and routing (e.g., single direct communication) may be set.

The communication protocol according to the present embodiment is designed for efficient and reliable communication between a master BMS and a plurality of slave BMSs in an xEV battery pack, and the communication protocol may maximize communication efficiency by making full use of the characteristics of the active phased array antenna system 410.

As described with reference to FIG. 6, in the physical layer of the communication protocol according to the present embodiment, a specified frequency band (e.g., 2.4 GHz to 2.5 GHz (ISM band)), a specified channel bandwidth (e.g., 20 MHz), a specified modulation method (e.g., adaptive QAM (QPSK, 16-QAM, 64-QAM)), and a specified maximum transmission rate (e.g., 54 Mbps (when using 64-QAM)) may be set.

The communication protocol according to the present embodiment may include a data link layer.

Referring to FIG. 7A, a frame structure includes a preamble field (repetition of 0xAA (bit synchronization)), a start frame delimiter field (0xD5 (frame start indication)), a frame control field (frame type, security settings, ACK request, etc.), a sequence number field (frame sequence number (0-255)), an address field (sender and receiver addresses (2 bytes each)), a payload field (actual data (up to 2048 bytes)), and a frame check sequence (FCS) field (CRC-32 checksum).

Referring to FIG. 7B, an example of hexadecimal raw data is illustrated, where "AAAAAAAAAAAAAAAAAA" is a preamble, "D5" is the start frame delimiter, "32 10" is the frame control, "7B" is the sequence number, "00 01" is the sender address (BMS 1), "00 02" is the receiver address (BMS #2), "Playload" is the payload, and "1A 2B 3C 4D" is the frame check sequence (CRC-32 checksum).

In the network layer of the communication protocol according to the present embodiment, an addressing scheme (e.g., master BMS-0x0000 and slave BMS-0x000~0xFFFE) and a routing protocol (e.g., single-hop communication by default and multi-hop routing support as necessary (e.g., when direct communication is not possible due to an obstacle)) are set.

The communication protocol according to the present embodiment may include a transport layer. The transport layer is a layer for performing connection management (e.g., connection establishment, 3-way handshake, connection release, and 2-way handshake) and reliable transmission (e.g., a selective retransmission ARQ and sliding window size (adaptive (1-64 frames)).

The communication protocol according to the present embodiment may include an application layer.

Here, message types of the application layer include "STATUS_REPORT (0x01): BMS status report," "COMMAND (0x02): control command," "ALERT (0x03): warning message," "CONFIG (0x04): configuration setting," and "DIAGNOSTIC (0x05): diagnostic information."

Among the message types of the application layer, a message structure of "STATUS_REPORT" includes "Message Type," "BMS ID," "Voltage," "Current," "Temperature," "SoC," and "Timestamp," as illustrated in FIG. 7C.

Referring to FIG. 7D, an example of raw data of "STATUS_REPORT" is illustrated, where "01" is the Message Type (STATUS_REPORT), "00 01" is the BMS ID (BMS #1), "0E 74" is the Voltage (3700 mV), "00 0A" is the Current (10 mA), "00 3C" is the Temperature (60 °C), "50" is the SoC (80%), and "5F 1A 2B 3C" is the Timestamp (Unix timestamp).

The communication protocol according to the present embodiment may include a beamforming optimization layer.

The beamforming optimization layer may include a CSI exchange field (e.g., period: 100 ms, structure: "CSI Flag," "Amplitude," and "Phase," size: 1+2+2=5 bytes per antenna element).

Referring to FIG. 7E, an example of raw data of "CSI for 4×4 array" is illustrated, where "FF" is the CSI Flag (start of CSI data), "00 80" is the Amplitude (128, normalized value), and "01 5E" means the Phase (350 degrees, and mapping 0-360 degrees to 0-65535).

The communication protocol according to the present embodiment may include a quality of service (QoS) field. The QoS field includes information on a priority level (e.g., CRITICAL (0x00)-emergency safety-related messages, HIGH (0x1)-important control commands, MEDIUM (0x2)-general status updates, and LOW (0x3)-non-critical data).

Referring to FIG. 7F, an example of frame control raw data to which the QoS field is added is illustrated, where "32 11" is the Frame Control (changed from "32 10" in the previous example), and the last 2 bits changed to 01 indicate HIGH priority.

The communication protocol according to the present embodiment may include a security layer.

The security layer may include information on an encryption algorithm (e.g., AES-128-GCM) and key exchange information (e.g., ECDH).

Referring to FIG. 7G, an example of encrypted payload raw data is illustrated, where actual data is encrypted in this way so that the meaning cannot be interpreted.

The communication protocol according to the present embodiment may include a field for energy efficiency optimization (i.e., energy efficiency improvement).

The field for energy efficiency optimization (i.e., energy efficiency improvement) may include information for adaptive transmission power control (e.g., level: 0 (-30 dBm to 150 dBm), 2 dB unit, and control period: 500 ms).

Referring to FIG. 7H, an example of power control command raw data is illustrated, where "02" is the Message Type (COMMAND), "00 01" is the Target BMS ID, and "0A" is the Power Level (10, -10 dBm).

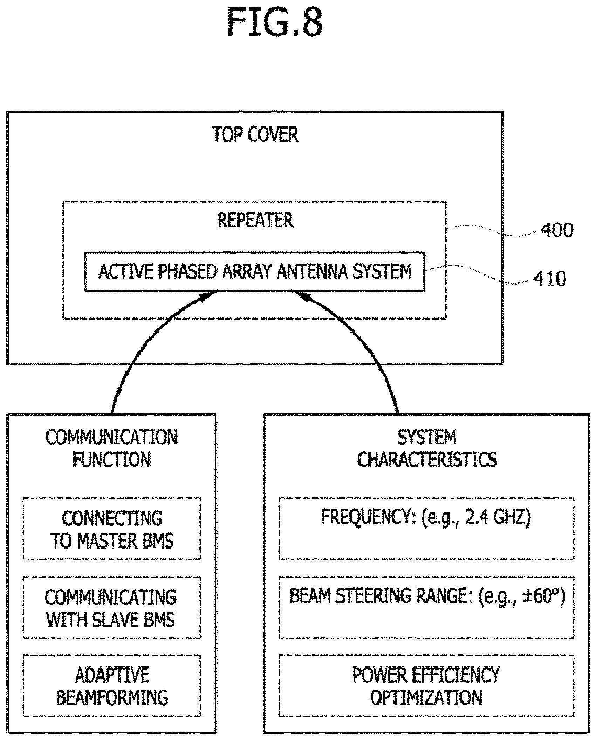

FIG. 8 is an example diagram for describing a communication function and system characteristics of the active phased array antenna system in FIG. 5.

Referring to FIG. 8, the active phased array antenna system 410 may be connected to the master BMS 300 as a communication function, may communicate with the plurality of slave BMSs 200, and may perform an adaptive beam popping algorithm during communication.

Referring to FIG. 8, the active phased array antenna system 410 may perform power efficiency optimization (i.e., power efficiency improvement) at a specified frequency (e.g., 2.4 GHz) and in a specified beam steering range (e.g., ±60°) as system characteristics.

In this way, the battery pack and the wireless communication apparatus according to the present embodiment may be used to implement a wireless BMS for a battery pack of an xEV, and may also be applied to a wireless BMS for an ESS. Further, since the function is controlled by software, the hardware may be applied without changing the hardware or by changing only part of the hardware even when the size or structure of the battery pack is changed. For example, this means that there is expandability and flexibility that the BMS system can be easily improved and expanded, just like updating an app on a smartphone.

As described herein, according to the present disclosure, by applying beamforming technology through an active phased array antenna, signal strength can be improved, and thus stable signal strength can be maintained despite a complex structure and metal shielding inside a battery pack and a PER can be reduced.

According to the present disclosure, through adaptive beam steering based on real-time CSI, optimal communication quality can be continuously maintained despite environmental changes, and this is effective even in extreme situations such as temperature changes or vibrations inside a battery pack.

According to the present disclosure, by applying SDMA technology, an increase in delay time due to an increase in the number of slave BMSs can be minimized, and thus performance essential for real-time monitoring and control can be improved.

According to the present disclosure, average power consumption of each slave BMS can be significantly reduced through adaptive duty cycling and intelligent power management, thereby improving the energy efficiency of the entire battery pack.

According to the present disclosure, a high level of security can be provided by combining PLS technology and the latest encryption algorithm, thereby significantly increasing resistance to external hacking attempts.

According to the present disclosure, by applying software-defined radio (SDR) technology, it is possible to apply the present disclosure to various battery pack configurations without hardware change, thereby shortening development time and reducing production costs.

According to the present disclosure, by applying beamforming technology through an active phased array antenna, signal strength can be improved, and thus stable signal strength can be maintained despite a complex structure and metal shielding inside a battery pack and a PER can be reduced.

According to the present disclosure, through adaptive beam steering based on real-time CSI, optimal communication quality can be continuously maintained despite environmental changes, and this is effective even in extreme situations such as temperature changes or vibrations inside a battery pack.

According to the present disclosure, by applying SDMA technology, an increase in delay time due to an increase in the number of slave BMSs can be minimized, and thus performance essential for real-time monitoring and control can be improved.

According to the present disclosure, average power consumption of each slave BMS can be significantly reduced through adaptive duty cycling and intelligent power management, thereby improving the energy efficiency of the entire battery pack.

According to the present disclosure, a high level of security can be provided by combining PLS technology and the latest encryption algorithm, thereby significantly increasing resistance to external hacking attempts.

According to the present disclosure, by applying software-defined radio (SDR) technology, it is possible to apply the present disclosure to various battery pack configurations without hardware change, thereby shortening development time and reducing production costs.

However, effects that can be achieved through the present disclosure are not limited to the herein-described effects and other effects that are not described may be clearly understood by those skilled in the art from the detailed descriptions.

The embodiments described herein may be implemented, for example, as a method or process, a device, a software program, a data stream, or a signal. Although discussed in the context of a single type of implementation (for example, discussed only as a method), features discussed herein may also be implemented in other forms (for example, a device or a program). The device may be implemented by suitable hardware, software, firmware, and the like. The method may be implemented on a device, such as a processor that generally refers to a processing device including a computer, a microprocessor, an integrated circuit, a programmable logic device, etc. The processor includes a communication device such as a computer, a cell phone, a personal digital assistant (PDA), and other devices that facilitate communication of information between the device and end-users.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, herein.

Further Embodiments are set out in the following clauses:
Clause 1. A battery pack comprising:
   a pack case;
   a plurality of battery modules mounted inside the pack case;
   a plurality of slave battery management systems (BMSs) that are mounted on each battery module and collect battery status information of each battery module; and
   a master BMS configured to receive the battery status information from each of the plurality of slave BMSs through radio frequency (RF) communication and integrate and manage the plurality of slave BMSs,
   wherein RF communication is performed between the plurality of slave BMSs and the master BMS through a repeater based on an active phased array antenna system.
Clause 2. The battery pack of clause 1, wherein the active phased array antenna system uses an adaptive beamforming algorithm based on real-time channel state information (CSI) in order to improve communication quality during the RF communication between the master BMS and the plurality of slave BMSs.
Clause 3. The battery pack of clause 1 or clause 2, wherein an active phased array antenna of the active phased array antenna system is composed of multiple small antennas arranged in a grid shape, adjusts a signal of each antenna by a control unit so that a strong signal is transmitted in a specific direction, and is installed inside a top cover of the pack case of the battery pack.
Clause 4. The battery pack of any preceding clause, wherein the master BMS simultaneously communicates with the plurality of slave BMSs through the repeater on the basis of a space-division multiple access (SDMA) method, and performs interference removal by applying a zero-forcing beamforming technique.
Clause 5. The battery pack of any preceding clause, wherein the master BMS adjusts a beam direction and beam shape of the active phased array antenna in real time to a slave BMS that will perform control in response to dynamic battery status information received through the plurality of slave BMSs.
Clause 6. The battery pack of any preceding clause, wherein the active phased array antenna system includes:
   an antenna array that includes a plurality of patch antenna elements and has an N×N array structure, where N is a natural number;
   an RF front-end implemented with a specified frequency band, a specified transmit power, a specified receive sensitivity, a specified modulation scheme, and a specified channel bandwidth; and
   a control unit that performs an adaptive beamforming algorithm.
Clause 7. The battery pack of clause 6, wherein the control unit is implemented to set a phase control method and a beam steering angle range of the adaptive beamforming algorithm and perform a process of setting a target direction, calculating a phase of each antenna element, generating a digital phase shifter control signal, and applying a phase delay to an RF signal.
Clause 8. The battery pack of any preceding clause, wherein the control unit of the active phased array antenna system monitors link quality according to quality criteria on the basis of specified measurement parameters during RF communication between the master BMS and the plurality of slave BMSs.
Clause 9. The battery pack of clause 8, wherein the control unit applies a specified security mechanism in order to enhance security of the communication protocol, and
   the security mechanism applies:
   physical layer security (PLS) that prevents eavesdropping using an artificial noise insertion technique; and
   an encryption method in which a specified encryption algorithm and a key exchange protocol are combined.
Clause 10. A wireless communication apparatus comprising:
   a plurality of battery modules mounted inside a pack case;
   a plurality of slave battery management systems (BMSs) that are mounted on each battery module and collect battery status information of each battery module;
   a master BMS configured to receive the battery status information from each of the plurality of slave BMSs through radio frequency (RF) communication and integrate and manage the plurality of slave BMSs; and
   a repeater based on an active phased array antenna system that is configured to perform the RF communication between the plurality of slave BMSs and the master BMS.
Clause 11. The wireless communication apparatus of clause 10, wherein the active phased array antenna system uses an adaptive beamforming algorithm based on real-time channel state information (CSI) in order to improve communication quality during the RF communication between the master BMS and the plurality of slave BMSs.
Clause 12. The wireless communication apparatus of clause 10 or clause 11, wherein the master BMS simultaneously communicates with the plurality of slave BMSs through the repeater on the basis of a space-division multiple access (SDMA) method, and performs interference removal by applying a zero-forcing beamforming technique.
Clause 13. The wireless communication apparatus of any one of clauses 10 - 12, wherein the master BMS adjusts a beam direction and beam shape of the active phased array antenna in real time to a slave BMS that will perform control in response to dynamic battery status information received through the plurality of slave BMSs.
Clause 14. The wireless communication apparatus of any one of clauses 10 - 13, wherein the control unit of the active phased array antenna system monitors link quality according to quality criteria on the basis of specified measurement parameters during RF communication between the master BMS and the plurality of slave BMSs.
Clause 15. A wireless communication method of a battery pack, comprising:
   measuring, by each of a plurality of slave battery management systems (BMSs), battery status information on each of battery modules and converting the measured battery status information into a radio frequency (RF) signal;
   transmitting, by each slave BMS, the RF signal to a master BMS through a repeater based on an active phased array antenna system;
   receiving, by the master BMS, the RF signal through the repeater;
   analyzing, by the master BMS, the battery status information corresponding to the RF signal; and
   transmitting, by the master BMS, a control signal according to a result of the analyzing of the battery status information to each of the plurality of slave BMSs through the repeater.

## Claims

1. A battery pack comprising:
a pack case;
a plurality of battery modules mounted inside the pack case;
a plurality of slave battery management systems, here after slave BMSs, that are mounted on each battery module and collect battery status information of each battery module;
a master BMS configured to receive the battery status information from each of the plurality of slave BMSs through radio frequency, hereafter RF, communication and integrate and manage the plurality of slave BMSs; and
a repeater comprising an active phased array antenna system, the repeater configured to perform RF communication between the plurality of slave BMSs and the master BMS .

2. The battery pack of claim 1, wherein the active phased array antenna system is configured to use an adaptive beamforming algorithm based on real-time channel state information.

3. The battery pack of claim 1 or claim 2, wherein an active phased array antenna of the active phased array antenna system is composed of multiple antennas arranged in a grid shape, wherein the active phased array antenna is configured to adjust a signal of each antenna by a control unit so that a strong signal is transmitted in a specific direction, and wherein the active phased array antenna is installed inside a top cover of the pack case of the battery pack.

4. The battery pack of any preceding claim, wherein the master BMS is configured to simultaneously communicate with the plurality of slave BMSs through the repeater on the basis of a space-division multiple access, hereafter SDMA, method, and to perform interference removal by applying a zero-forcing beamforming technique.

5. The battery pack of any preceding claim, wherein the master BMS is configured to adjust a beam direction and beam shape of the active phased array antenna in real time to a slave BMS that will perform control in response to dynamic battery status information received through the plurality of slave BMSs.

6. The battery pack of any preceding claim, wherein the active phased array antenna system includes:
an antenna array that includes a plurality of patch antenna elements and has an N×N array structure, where N is a natural number;
an RF front-end implemented with a specified frequency band, a specified transmit power, a specified receive sensitivity, a specified modulation scheme, and a specified channel bandwidth; and
a control unit configured to perform an adaptive beamforming algorithm.

7. The battery pack of claim 6, wherein the control unit is configured to set a phase control method and a beam steering angle range of the adaptive beamforming algorithm and to perform a process of setting a target direction, calculating a phase of each antenna element, generating a digital phase shifter control signal, and applying a phase delay to an RF signal.

8. The battery pack of any preceding claim, wherein the control unit of the active phased array antenna system is configured to monitor link quality according to quality criteria on the basis of specified measurement parameters during RF communication between the master BMS and the plurality of slave BMSs.

9. The battery pack of claim 8, wherein the control unit is configured to apply a security mechanism in order to enhance security of the communication protocol, and
the security mechanism applies:
physical layer security that uses an artificial noise insertion technique; and
an encryption method in which a specified encryption algorithm and a key exchange protocol are combined.

10. A wireless communication apparatus comprising a battery pack according to any preceding claim.

11. A wireless communication method of a battery pack, comprising:
measuring, by each of a plurality of slave battery management systems, hereafter slave BMSs, battery status information on each of battery modules and converting the measured battery status information into a radio frequency, hereafter RF, signal;
transmitting, by each slave BMS, the RF signal to a master BMS through a repeater based on an active phased array antenna system;
receiving, by the master BMS, the RF signal through the repeater;
analyzing, by the master BMS, the battery status information corresponding to the RF signal; and
transmitting, by the master BMS, a control signal according to a result of the analyzing of the battery status information to each of the plurality of slave BMSs through the repeater.
